# EUROPÄISCHE PATENTANMELDUNG

(11) **EP 1 382 573 A1**
(43) Veröffentlichungstag der Anmeldung: **21.01.2004**
(21) Anmeldenummer: 02015219.5
(22) Anmeldetag: 09.07.2002
(51) Int. Cl.: C02F 1/461

(54) **Vorrichtung zur automatischen Reinigung einer Reaktorkammer in einer Wasseraufbereitungsanlage**

(71) Anmelder: Rebscher, Hartmut, 64743 Beerfelden (DE); Freibott, Manfred, 42549 Velbert (DE); Galambodi, Attila, 65936 Frankfurt (DE)
(72) Erfinder: Rebscher, Hartmut, 64743 Beerfelden (DE)

(57) **Zusammenfassung**

Die Erfindung bezieht sich auf eine Vorrichtung zur automatischen Reinigung einer Reaktorkammer in einer Wasseraufbereitungsanlage, wobei der Reaktor als Diaphragmalysezelle aus einer salzhaltigen Lösung eine Katholytreinigungs- und eine Anolytdesinfektionslösung erzeugt.

## Beschreibung

Die Erfindung bezieht sich auf eine Vorrichtung zur automatischen Reinigung einer Reaktorkammer in einer Wasseraufbereitungsanlage, wobei der Reaktor als Diaphragmalysezelle aus einer salzhaltigen Lösung eine Katholytreinigungs- und Anolytdesinfektionslösung erzeugt, die dem zu reinigenden Rohwasser dosiert zugeführt werden, und bei der der Reaktor aus einer Kammer mit einer negativen Kathode, einer Kammer mit einer positiven Anode und einem Diaphragma (Membrane) besteht, bei dem durch die Membrane hermetisch voneinander getrennte Kammern ein Gemisch aus Salz (NaCI) und Wasser (H2O) als Sole fließt.

Die elektrochemische Aktivierung, genannt ECA, stellt eine äußerst umweltfreundliche Desinfektionsmethode dar. Hier wird eine salzhaltige Lösung, meistens eine NaCl - Natriumchloridlösung oder Na₂So₄ Natriumsulfatlösung, elektrochemisch in einem Reaktor aktiviert.

Der Aufbau eines solchen speziellen Reaktors, Membranelektrolysezelle oder auch Diaphragmalysezelle genannt, besteht aus zwei Kammern in welchen sich jeweils auf der gegenüberliegenden Seite zwei Elektroden angeordnet befinden, eine positive Elektrode, die Anode 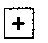 und eine negative Elektrode, die Kathode 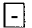

Zwischen beiden Elektroden ist eine flüssigkeitsundurchlässige Scheidewand, ein Diaphragma, eingebaut. Es findet hier kein Flüssigkeitsaustausch oder Durchmischung der Flüssigkeiten aus der Anoden- oder Kathodenkammer statt, sondern nur einen lonenaustausch.

Durch das Anlegen von Gleichstrom in der salzhaltigen Flüssigkeit werden Anionen und Kationen gebildet. Durch das Anlegen einer bestimmten Spannung kommt eine entsprechende Stromstärke zustande, die sich nach der Konzentration des Salzgehaltes der Solelösung richtet.

Die hier zur Anwendung kommende Lösung ist ein Salz-Wassergemisch, ein Natriumchlorid Wassergemisch. Durch Stromzugabe beginnt sich die Lösung in Anionen und Kationen aufzuspalten. Die negativ geladenen lonen, die Kationen, wandern durch das Diaphragma (Scheidewand) hindurch zur Anode und die positiv geladenen lonen, die Anionen, umgekehrt wandern zur Kathode.

Aus der ursprünglichen Salzlösung werden zwei wässrige instabile Lösungen produziert. Im Anodenraum der Diaphragmalysezelle bildet sich eine saure Lösung genannt Anolyt mit einem pH-Wert von 1,2 bis 2,5 einer Redoxspannung von über + 1140 mV und einem Leitwert von ca. 12 mS / cm.

Im Kathodenraum dieser Diaphragmalysezelle bildet sich eine instabile alkalische Flüssigkeit namens Katholyt mit einem pH-Wert von über 12,0 einer Redoxspannung von- 900 mV und einem Leitwert von ca. 14 mS / cm.

Bei zu hoher Rohwasserhärte fällt Kalk an der Kathodenelektrode 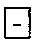 aus. Durch zu starkem Kalkbelag auf der Elektrode erfolgt kein Stromfluss von der Anode zur Kathode und umgekehrt mehr. Somit ist auch keine Anolyte- oder Katholytelösung mehr zu produzieren.

Aber bei der Membranelektrolyse bzw. dem diaphragmalytischen Verfahren / Prozeß besteht immer die Gefahr der Ausfällung von Kalk speziell an der negativen Elektrodenfläche in der Kathodenkammer.

Selbst bei enthärteter Rohwassemutzung erfolgt eine geringe Aufhärtung bei Zugabe der erforderlichen verdünnten NaCI-Solelösung. Denn das verwendete vollgesättigter Salz NaCI enthält immer Kalziumanteile.

Diesem Umstand begegnete man bisher mit einer turnusgemäßen Spülung der Kathodenkammer und der darin befindlichen Elektrode mit einer Säure, Salzsäure oder Sulfaminsäure oder ähnlichem.

Dazu wird eine säurebeständige Spülpumpe benötigt, einen Säurevorratsbehälter mit Niveaubegrenzer damit ein Trockenlaufen der Pumpe verhindert wird, sowie eine Steuerung dieser Spüleinrichtung.

Nach einer vorprogrammierten Zeit wird dann die Spülung / Reinigung eingeleitet. Danach wird die Säureförderpumpe abgeschaltet und mit der Wasserpumpe Frischwasser durch diese Kathodenkammer gefördert, zur Ausspülung der Säurereste.

Aufgabe der Erfindung ist es, eine Vorrichtung zur automatischen Reinigung einer Reaktorkammer zu schaffen, bei der keinerlei Chemiezusätze zur Reinigung der Kammern benötigt werden. Es wird einzig und allein die bei diesem Membranelektrolyseprozess gewonnenen sauren Anolytlösung zur Spülung und Reinigung verwendet.

Gemäß der Erfindung wird die Aufgabe dadurch gelöst, dass dem Reaktor ein Vorratsbehälter für Spül- und Reinigungslösung zugeordnet ist, der während des Betriebes der Wasseraufbereitungsanlage ständig mit frischer, sauerer Anolytlösung versorgt wird, und dass bei einem Reinigungsvorgang die im Vorratsbehälter befindlichen Anolytlösung durch die Kammer mit der Kathode geleitet wird.

Bei diesem Verfahren entfällt die Bereitstellung von einer externen Säurelösung zur Reinigung, sowie einer dafür geeigneten Pumpe. Ebenso entfällt eine anschließende Spülung der Kammer mittels Frischwasser von Säureresten. Die Reste des verwendeten sauren Anolytes neutralisiert sich wieder mit der anschließenden Neuproduktion von Katholytlösung.

Eine vorteilhafte Ausgestaltung der Erfindung ist dadurch gekennzeichnet, dass der Vorratsbehälter mit Anolytlösung während des Betriebes der Wasseraufbereitungsanlage über eine Ableitung mit dem Reaktor verbunden ist, und dass die Anolytlösung durch den Vorratsbehälter über ein Dreiwegeventil und eine Leitung einem Steuerungsspeicher und von hier einer Dosierpumpe der Wasseraufbereitungsanlage zugeführt wird.

In einer weiteren vorteilhaften Ausgestaltung der Erfindung wird zum Reinigen der Kammer mit negativer Kathode das erste Dreiwegeventil umgeschaltet, so dass die im Vorratsbehälter vorhandene Anolytlösung über ein ebenfalls umgeschaltetes zweites Dreiwegeventil in die Kathodenkammer geleitet wird und danach dem Abwasser zugeführt wird.

Während des Betriebes der Wasseraufbereitungsanlage wird über eine Zuleitung die Sole sowohl der Anolytkammer als auch über das umgeschaltete zweite Dreiwegeventil der Kathodenkammer zugeführt, wobei das in der Kathodenkammer erzeugte Katholyt über eine Leitung einer Dosierpumpe der Wasseraufbereitungsanlage zugeführt wird.

### Beschreibung:

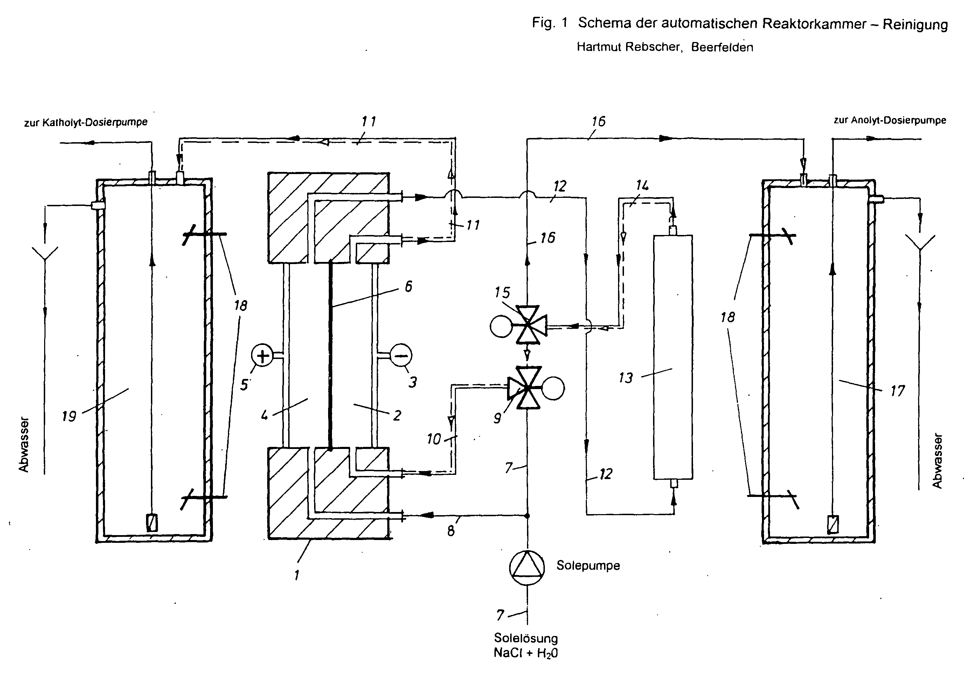

In Fig. 1 ist ein Reaktor 1 gezeigt, der eine erste Kammer 2 mit einer Kathode 3 und eine zweite Kammer 4 mit einer Anode 5 aufweist. Beide Kammern 2, 4 sind hermetisch voneinander durch ein Diaphragma (Membrane) 6 getrennt. Beiden Kammern 2, 4 wird über eine Zuleitung 7 ein Gemisch aus Salz (NaCI) und Wasser (H₂O) als Sole zugeführt. Die Zuleitung 7 leitet über eine Abzweigung 8 einen Teil der Sole in die Kammer 4, in der eine Anolytlösung hergestellt wird. Der andere Teil der Sole gelangt über ein Dreiwegeventil 9 und eine Zuleitung 10 in die Kammer 2 zur Herstellung einer Katholytreinigungslösung, die sodann am anderen Ende des Reaktors 1 über eine Leitung 11 zur Entwässerung, oder in einen Katholyt-Steuerungsspeicher 19 abgeleitet wird, der eine Niveauregelung 18 aufweist. Von dort wird die Katholytlösung über eine Dosierpumpe der Wasseraufbereitungsanlage zugeführt.

Während des Betriebes der Wasseraufbereitungstanlage gelangt die in der Kammer 4 hergestellte Anolytlösung über eine Ableitung 12 in einen Vorratsbehälter 13, durchfließt diesen und gelangt über eine Ableitung 14, ein Dreiwegeventil 15 und eine Leitung 16 in einen Anolyt-Steuerungsspeicher 17, der eine Niveauregelung 18 aufweist. Von hier wird die Anolytlösung über eine Dosierpumpe der Wasseraufbereitungsanlage zugeleitet.

Zur Reinigung der Kathodenelektrode 3 in der Kammer 2 von zu starkem Kalkbelag wird das Dreiwegeventil 15 umgeschaltet, so dass die im Vorratsbehälter 13 vorhandene Anolytlösung über die Ableitung 14, das Dreiwegeventil 15, das ebenfalls umgeschaltete Dreiwegeventil 9 und die Zuleitung 10 in die Kathodenkammer 2 geleitet wird und hier den Kalkbelag auflöst. Die verbrauchte Anolytlösung wird sodann über die Leitung 11 dem Abwasser oder dem Steuerungsspeicher 19 zugeführt.

Der Vorratsbehälter 13 ist volumenmäßig so bemessen, dass eine gute Reinigung der Elektrodenfläche gewährleistet ist. Danach erfolgt ein erneuter Start der Anolytund Katholytproduktion.

Zur Durchführung der beschriebenen Maßnahmen wird der notwendige Flüssigkeitsdruck im Reaktor 1, dem Vorratsbehälter 13 und den zugehörigen Leitungen entweder durch die Verwendung einer Pumpe oder bei Anschluss an ein Wasserfestnetz von dessen Wasserleitungsdruck vorgegeben.

## Patentansprüche

1. Vorrichtung zur automatischen Reinigung einer Reaktorkammer in einer Wasseraufbereitungsanlage, wobei der Reaktor als Diaphragmalysezelle aus einer salzhaltigen Lösung eine Katholytreinigungs- und Anolytdesinfektionslösung erzeugt, die dem zu reinigenden Rohwasser dosiert zugeführt werden, und bei der der Reaktor aus einer Kammer mit einer negativen Kathodenelektrode, einer Kammer mit einer positiven Anodenelektrode und einem Diaphragma (Membrane) besteht, bei dem durch die Membrane hermetisch voneinander getrennte Kammern ein Gemisch aus Salz (NaCI) und Wasser (H₂O) als Sole fließt
**dadurch gekennzeichnet,**
**dass** dem Reaktor (1) ein Vorratsbehälter (13) für Spül- und Reinigungslösung zugeordnet ist, der während des Betriebes der Wasseraufbereitungsanlage ständig mit frischer, sauerer Anolytlösung versorgt wird
und **dass** bei einem Reinigungsvorgang die im Vorratsbehälter (13) befindliche Anolytlösung durch die Kammer (2) mit der Kathode (3) geleitet wird.

2. Vorrichtung nach Anspruch 1,
**dadurch gekennzeichnet,**
**dass** der Vorratsbehälter (13) mit Anolytlösung während des Betriebes der Wasseraufbereitungsanlage über eine Ableitung (12) mit dem Reaktor (1) verbunden ist, und dass die Anolytlösung durch den Vorratsbehälter (13) über ein Dreiwegeventil (15) und eine Leitung (16) einem Steuerungsspeicher (17) und von hier über eine Dosierpumpe der Wasseraufbereitungsanlage zugeführt wird.

3. Vorrichtung nach Anspruch 1,
**dadurch gekennzeichnet,**
**dass** zum Reinigen der Kammer (2) mit negativer Kathode (3) das erste Dreiwegeventil (15) umgeschaltet wird, so dass die im Vorratsbehälter (13) vorhandene Anolytlösung über ein ebenfalls umgeschaltetes zweites Dreiwegeventil (9) in die Kathodenkammer (2) geleitet wird und danach dem Abwasser zugeführt wird.

4. Vorrichtung nach Anspruch 1,
**dadurch gekennzeichnet,**
**dass** während des Betriebes der Wasseraufbereitungsanlage über eine Zuleitung (7) die Sole sowohl der Anolytkammer (4) als auch über das umgeschaltete zweite Dreiwegeventil (9) der Kathodenkammer (2) zugeführt wird, wobei das in der Kathodenkammer (2) erzeugte Katholyt über eine Leitung (11) einem Steuerungsspeicher 19 zugeführt wird von dem aus eine Dosierpumpe die Wasseraufbereitungsanlage mit Katholytlösung versorgt.
